# EUROPEAN PATENT SPECIFICATION

(11) **EP 2 552 168 B1**
(45) Date of publication and mention of the grant of the patent: **17.05.2017**
(21) Application number: 11360030.8
(22) Date of filing: 27.07.2011
(51) Int. Cl.: H04W 72/12, H04W 84/18

(54) **Clustering and resource allocation in ad hoc networks**
Clustering und Betriebsmittelzuweisung in ad hoc Netzen
Regroupement et allocation des ressources dans les réseaux ad hoc

(43) Date of publication of application: 30.01.2013
(73) Proprietor: ALCATEL LUCENT, 92100 Boulogne-Billancourt (FR)
(72) Inventor: Mullany, Francis J., Drimnagh, Dublin 12 (IE); Lin, Chih-Kuang, Blanchardstown, Dublin 15 (IE)
(74) Representative: Sarup, David Alexander

(56) References cited:
- US-A1- 2008 062 866
- TOSCANO E ET AL: "A multichannel approach to avoid beacon collisions in IEEE 802.15.4 cluster-tree industrial networks", EMERGING TECHNOLOGIES&FACTORY AUTOMATION, 2009. ETFA 2009. IEEE CONFERENCE ON, IEEE, PISCATAWAY, NJ, USA, 22 September 2009 (2009-09-22), pages 1-9, XP031575713, ISBN: 978-1-4244-2727-7
- UDGATA S K ET AL: "A balanced 1-hop clustering scheme for Mobile Ad Hoc Network", WIRELESS COMMUNICATION AND SENSOR NETWORKS, 2008. WCSN 2008. FOURTH INTERNATIONAL CONFERENCE ON, IEEE, PISCATAWAY, NJ, USA, 27 December 2008 (2008-12-27), pages 45-50, XP031417516, ISBN: 978-1-4244-3327-8
- UICHIN LEE ET AL: "Pressure Routing for Underwater Sensor Networks", INFOCOM, 2010 PROCEEDINGS IEEE, IEEE, PISCATAWAY, NJ, USA, 14 March 2010 (2010-03-14), pages 1-9, XP031674873, ISBN: 978-1-4244-5836-3

## Description

### FIELD OF THE INVENTION

The present invention relates to methods of scheduling network node transmission in a wireless communication network, computer program products, a network node gateway and a network node.

### BACKGROUND

Wireless communication networks are known. In such wireless communication networks, network nodes are provided which communicate wirelessly with each other. Various protocols exist to enable communication between network nodes to occur efficiently.

Some protocols adopt a carrier sense multiple access with collision avoidance technique to reduce the occurrence of interfering transmissions. Other protocols exchange control messages, such as request-to-send and clear-to-send messages to reduce the occurrence of such interfering transmissions. Other protocols use a two radio architecture to provide a data channel and a signalling channel. This allows the data channel to sleep until communication is required. The signalling channel uses request-to-send, clear-to-send exchanges or busy tones to alleviate the occurrence of interfering transmissions. Yet further protocols use scheduling-based channel access techniques by following two-hop graph colouring theory to reduce the occurrence of concurrent interfering transmissions.

TOSCANO E et al: "A multichannel approach to avoid beacon collisions in IEEE 802.15.4 cluster-tree industrial networks", EMERGING TECHNOLOGIES & FACTORY AUTOMATION, 2009. ETFA 2009. IEEE CONFERENCE ON, IEEE, PISCATAWAY, NJ, USA, 22 September 2009 (2009-09-22), pages 1-9) discloses a multichannel approach to avoid beacon collisions in the cluster-tree networks. In a cluster-tree network, the network is organized in clusters, each one with a coordinator. Each node can request to a coordinator the allocation or the de-allocation of a guaranteed timeslot. The coordinator on each beacon interval decides which allocation requests are still valid and how to allocate them, then informs the nodes of its cluster through the beacon. Each node receiving the beacon knows whether its allocation request has been accepted or not. Accordingly, a multichannel, superframe scheduling technique is disclosed where clusters transmit on different radio channels and at different times.

Although each of these approaches facilitates the operation of wireless communication networks, they each have their own shortcomings. Accordingly, it is desired to provide an improved communication technique for a wireless communication network.

### SUMMARY

According to a first aspect, there is provided a method of scheduling network node transmission in a wireless communication network as claimed in Claim 1.

The first aspect recognizes that a problem with the carrier sense multiple access with collision avoidance technique is that collisions may occur between interfering transmissions due to network nodes within the wireless communication network being unable to sense transmissions made by other network nodes within the network. This problem is likely to increase as antenna design and radio technology increases the communications range of network nodes and as the proliferation of new types of network applications introduce more functional nodes into the wireless communication network. Also, whilst the request-to-send and clear-to-send approach helps to alleviate this problem, it is expensive for applications such as a wireless sensor network in terms of the control message overhead and energy consumption. Sensor nodes are typically energy constrained and their data packet is usually small compared with a conventional data packet, causing a high overhead cost when using the request-to-send and clear-to-send approach. Likewise, a two radio architecture requires a second set of radio components to be provided in a sensor node and consumes more energy, which reduces the battery life of the sensor node. Although scheduling-based techniques are possible, those typically increase protocol complexity and increase the control message overhead in large scale or dynamic networks and lack robustness.

Accordingly, a method of scheduling network node transmissions in a wireless communication network is provided. The method may comprise the step of causing allocation of each network node of the wireless communication network to a cluster of network nodes. Each cluster of network nodes may comprise those network nodes which have detected transmissions from every network node within the cluster. The method may also comprise the step of scheduling transmissions by network nodes within each cluster to occur using resources of a transmission scheme which are allocated to be shared by network nodes within the cluster.

Accordingly, network nodes may be allocated or grouped into clusters. The network nodes may belong to one or more different clusters and each cluster may have one or more network nodes. Each cluster may only contain those network nodes which are able to detect transmissions made by other network nodes within the cluster. This ensures that every network node within the cluster is able to sense transmissions made by all network nodes within that cluster. In other words, each cluster contains no network nodes which are undetectable by other network nodes within the cluster. Each cluster may then be allocated resources with which to perform transmissions. That is to say, each cluster may be scheduled to use different resources for their transmissions. This means that inter-cluster transmissions (i.e. transmission by network nodes from different clusters) avoid collision or interference since they are scheduled to be transmitted using different resources. Also, because each network node in the cluster is able to detect or sense transmissions by other network nodes within the cluster, no collisions or interference should occur as a result of intra-cluster transmissions (i.e. transmissions within each cluster). This helps to improve the performance of the wireless communication network, particularly those which operate the contention-based channel access technology Carrier Sensing Multiple Access / Collision Avoidance (CSMA/CA) to deliver their traffic to a destination node. In embodiments, network nodes are allocated to clusters using one of distributed and centralised clustering techniques. In embodiments, using one of distributed and centralised clustering techniques is selectable.

In one example, the step of causing allocation comprises allocating each network node to at least one of a plurality of clusters of network nodes by excluding from a cluster of network nodes any network node unable to detect transmissions from every network node within that cluster. Accordingly, hidden network nodes which are unable to detect transmissions of every network node within the cluster may be excluded from the cluster. This helps to ensure that clusters contain no hidden network nodes. It will be appreciated that this may be performed by both distributed and centralised clustering techniques.

In one example, the step of causing allocation comprises allocating each network node to at least one of a plurality of clusters of network nodes by omitting from a cluster of network nodes any network node which is not a one-hop neighbour of every network node within that cluster. Hence, those network nodes which are not one-hop neighbours of every network node within a cluster may also be omitted from that cluster. Again, this helps to reduce the occurrence of hidden network nodes. It will be appreciated that this may be performed by both distributed and centralised clustering techniques.

In one example, the step of causing allocation comprises allocating each network node to at least one of a plurality of clusters of network nodes to minimise a total number of the plurality of clusters of network nodes. Minimising the number of clusters formed reduces the spreading of scheduling resources (increases the sharing of scheduling resource) and helps to improve the throughput of the wireless communications network. It will be appreciated that this may be performed by both distributed and centralised clustering techniques.

The step of causing allocation comprises determining one-hop neighbours for each network node from a neighbour list for that network node and including in a cluster of network nodes only those network nodes whose neighbour list includes all other network nodes within the cluster of network nodes. Accordingly, a neighbour list may be determined for each network node and the network node list then utilized to determine the members of each cluster. It will be appreciated that this may be performed by both distributed and centralised clustering techniques.

In one example, the step of causing allocation comprises deriving a cluster of network nodes by determining from the one-hop neighbour lists whether the network nodes within that cluster of network nodes are one-hop neighbours of every network node within that cluster of network nodes and, if not, excluding a network node from that cluster of network nodes based on a member weight indicated in the one-hop neighbour lists for that cluster of network nodes. Accordingly, the neighbour lists may be utilized to form clusters made of groups of network nodes which are each one-hop neighbours. In order to generate a cluster formed of one-hop neighbours, the neighbour lists may be examined to determine whether every network node in the cluster is a one-hop neighbour and, if not, the network node with the lowest member weighting (the lowest occurring network node in the neighbour lists) may be removed from the cluster and the resultant neighbour lists re-examined. It will be appreciated that this may be performed by both distributed and centralised clustering techniques.

In one example, the step of causing allocation comprises causing network nodes to perform a node announcement and to derive a one-hop neighbour list for each network node, and utilising each one-hop neighbour list in multiple result cluster of network nodes formation procedure which determines a number of different resultant pluralities of clusters of network nodes by allocating network nodes to clusters of network nodes starting with at least one of network nodes having a highest number of neighbours, network nodes having a lowest number of neighbours and network nodes having intermediate number of neighbours. Accordingly, a node announcement may be initiated by each of the network nodes and the resultant one-hop neighbour lists generated as a result. Each one-hop neighbour list may then be utilized to form different resultant network clusters based on different cluster formation criteria. Clusters may be formed by using those network nodes having the highest number of neighbours or by those network nodes having the lowest number of neighbours, or those network nodes having an intermediate, average or median number of neighbours. It will be appreciated that this leads to different resultant clusters. It will be appreciated that this may be performed by centralised clustering techniques.

In one example, the step of causing allocation comprises selecting a resultant plurality of clusters of network nodes which minimises a number of clusters of network nodes. It will be appreciated that this may be performed by centralised clustering techniques.

In one example, the step of causing allocation comprises selecting a resultant plurality of clusters of network nodes which minimises a variation in a number of network nodes within each clusters of network nodes. It will be appreciated that this may be performed by centralised clustering techniques.

In one example, the step of causing allocation comprises causing network nodes to perform a node announcement and derive a one-hop neighbour list for each network node, delaying a cluster head transmission by each network node based on at least one of a number of neighbours indicated in the one-hop neighbour list for that network node and remaining energy of that network node, receiving one-hop neighbour lists from each network node which received the cluster head transmission from a cluster head network node for that cluster of network nodes and deriving a cluster of network nodes which maximises a number of network nodes within that cluster of network nodes and which are also indicated by the one-hop neighbour lists as being one-hop neighbours of every network node within that cluster of network nodes. Delaying the cluster head formation message enables the characteristics of the cluster head to be influenced. For example, it is possible to cause cluster heads to be those with the most or fewest neighbours or based on the energy of the network node. For example, it may be desirable to have cluster heads which have the greatest number of neighbours and which have the most amount of remaining energy, but equally other selection criteria may apply. It will be appreciated that this may be performed by distributed clustering techniques.

In one example, the method comprises the step of delaying the node announcement by a period based on an identifier of the network node. Delaying the node announcement message based on the identifier of the network node reduces the likelihood of node announcement messages colliding.

In one example, the step of delaying the cluster head transmission comprises delaying the cluster head transmission by each network node based on an identifier of the network node.

In one example, the step of scheduling comprises allocating the resources to each cluster of network nodes in proportion to a number of network nodes within that cluster of network nodes. Accordingly, resources may be allocated based on the number of network nodes within a cluster. This scales the amount of resources allocated to the cluster based on the cluster size. This approach provides application-dependent scheduling methods driven by different traffic patterns. The traffic patterns may be predictable, periodic traffic or may be bursty, non-periodic traffic. Static scheduling is for the predictable, periodic traffic and it may assign a fixed transmission schedule in proportion to cluster sizes. On-demand scheduling is for the bursty, non-periodic traffic and it proposes a special scheduling scheme that manages an adaptive transmission schedule for all clusters while enabling full compatibility with the IEEE 802.15.4 standard.

In one example, the step of scheduling comprises allocating the resources to each cluster of network nodes in proportion to a number of pending traffic transmission requests from network nodes within that cluster of network nodes. Accordingly, the resources allocated to each cluster may be based on transmission requests (an amount of bandwidth request) made by network nodes within that cluster so that those clusters which make more transmission requests may be allocated more resources.

In one example, the step of scheduling comprises scheduling network nodes within each of the plurality of clusters to perform carrier sense multiple access with collision avoidance transmissions in a time period allocated for shared transmissions by network nodes within that cluster of network nodes. Accordingly, transmissions of the network nodes from different clusters may be time-division multiplexed and each cluster may be allocated a time period within which network nodes within that cluster may perform their transmissions using CSMA/CA.

According to a second aspect, there is provided a network node gateway as claimed in Claim 11.

In one example, the allocation logic is operable allocate each network node to at least one of a plurality of clusters of network nodes by excluding from a cluster of network nodes any network node unable to detect transmissions from every network node within that cluster.

In one example, the allocation logic is operable allocate each network node to at least one of a plurality of clusters of network nodes by omitting from a cluster of network nodes any network node which is not a one-hop neighbour of every network node within that cluster.

In one example, the allocation logic is operable allocate each network node to at least one of a plurality of clusters of network nodes to minimise a total number of the plurality of clusters of network nodes.

The allocation logic is operable to determine one-hop neighbours for each network node from a neighbour list for that network node and to include in a cluster of network nodes only those network nodes whose neighbour list includes all other network nodes within the cluster of network nodes.

In one example, the allocation logic is operable to derive a cluster of network nodes by determining from the one-hop neighbour lists whether the network nodes within that cluster of network nodes are one-hop neighbours of every network node within that cluster of network nodes and, if not, excluding a network node from that cluster of network nodes based on a member weight indicated in the one-hop neighbour lists for that cluster of network nodes.

In one example, the allocation logic is operable to cause network nodes to perform a node announcement and to derive a one-hop neighbour list for each network node, and to utilise each one-hop neighbour list in a multiple-result cluster of network nodes formation procedure which determines a number of different resultant pluralities of clusters of network nodes by allocating network nodes to clusters of network nodes starting with at least one of network nodes having a highest number of neighbours, network nodes having a lowest number of neighbours and network nodes having intermediate number of neighbours.

In one example, the allocation logic is operable to select a resultant plurality of clusters of network nodes which minimises a number of clusters of network nodes.

In one example, the allocation logic is operable to select a resultant plurality of clusters of network nodes which minimises a variation in a number of network nodes within each clusters of network nodes.

In one example, the scheduling logic is operable to allocate the resources to each cluster of network nodes in proportion to a number of network nodes within that cluster of network nodes.

In one example, the scheduling logic is operable to allocate the resources to each cluster of network nodes in proportion to a number of pending traffic transmission requests (an amount of bandwidth request) from network nodes within that cluster of network nodes.

In one example, the scheduling logic is operable to schedule network nodes within each of the plurality of clusters to perform carrier sense multiple access with collision avoidance transmissions in a time period allocated for shared transmissions by network nodes within that cluster of network nodes.

A method of scheduling a network node transmission in a wireless communication network is disclosed, the method comprises: allocating the network node to at least one of a plurality of clusters of network nodes, each cluster of network nodes comprising only those network nodes which detect transmissions from every network node within that cluster; and scheduling transmissions by the network node using resources of a transmission separation scheme allocated to be shared by network nodes within the at least one of a plurality of clusters of network nodes.

The step of allocating comprises allocating each network node to at least one of a plurality of clusters of network nodes by excluding from a cluster of network nodes any network node unable to detect transmissions from every network node within that cluster.

The step of allocating comprises allocating each network node to at least one of a plurality of clusters of network nodes by omitting from a cluster of network nodes any network node which is not a one-hop neighbour of every network node within that cluster.

The step of allocating comprises allocating each network node to at least one of a plurality of clusters of network nodes to minimise a total number of the plurality of clusters of network nodes.

The step of allocating comprises determining one-hop neighbours for each network node from a neighbour list for that network node and including in a cluster of network nodes only those network nodes whose neighbour list includes all other network nodes within the cluster of network nodes.

The step of allocating comprises deriving a cluster of network nodes by determining from the one-hop neighbour lists whether the network nodes within that cluster of network nodes are one-hop neighbours of every network node within that cluster of network nodes and, if not, excluding a network node from that cluster of network nodes based on a member weight indicated in the one-hop neighbour lists for that cluster of network nodes.

The step of allocating comprises performing a node announcement, deriving a one-hop neighbour list and delaying a cluster head transmission based on at least one of a number of neighbours indicated in the one-hop neighbour list and remaining energy, receiving one-hop neighbour lists from each network node which received the cluster head transmission and deriving a cluster of network nodes which maximises a number of network nodes within that cluster of network nodes and which are also indicated by the one-hop neighbour lists as being one-hop neighbours of every network node within that cluster of network nodes.

The step of allocating comprises delaying the node announcement by a period based on an identifier of the network node. This approach reduces the chances of transmission collisions.

The step of allocating comprises delaying the cluster head transmission based on at least one of a number neighbours indicated in the one-hop neighbour list, an amount of remaining network node energy and a network node identifier.

A network node of a wireless communication network is disclosed, the network node comprises: allocation logic operable to assist in allocation of the network node to at least one of a plurality of clusters of network nodes, each cluster of network nodes comprising only those network nodes which detect transmissions from every network node within that cluster; and scheduling logic operable to schedule transmissions by the network node using resources of a transmission separation scheme allocated to be shared by network nodes within the at least one of a plurality of clusters of network nodes.

The allocation logic is operable to allocate each network node to at least one of a plurality of clusters of network nodes by excluding from a cluster of network nodes any network node unable to detect transmissions from every network node within that cluster.

The allocation logic is operable to allocate each network node to at least one of a plurality of clusters of network nodes by omitting from a cluster of network nodes any network node which is not a one-hop neighbour of every network node within that cluster. The allocation logic is operable to allocate each network node to at least one of a plurality of clusters of network nodes to minimise a total number of the plurality of clusters of network nodes.

The allocation logic is operable to determine one-hop neighbours for each network node from a neighbour list for that network node and to include in a cluster of network nodes only those network nodes whose neighbour list includes all other network nodes within the cluster of network nodes.

The allocation logic is operable to derive a cluster of network nodes by determining from the one-hop neighbour lists whether the network nodes within that cluster of network nodes are one-hop neighbours of every network node within that cluster of network nodes and, if not, excluding a network node from that cluster of network nodes based on a member weight indicated in the one-hop neighbour lists for that cluster of network nodes.

The allocation logic is operable to perform a node announcement, to derive a one-hop neighbour list and to delay a cluster head transmission based on at least one of a number of neighbours indicated in the one-hop neighbour list and remaining energy, to receive one-hop neighbour lists from each network node which received the cluster head transmission and to derive a cluster of network nodes which maximises a number of network nodes within that cluster of network nodes and which are also indicated by the one-hop neighbour lists as being one-hop neighbours of every network node within that cluster of network nodes.

The allocation logic is operable to delay the node announcement by a period based on an identifier of the network node.

The allocation logic is operable to delay the cluster head transmission based on at least one of a number neighbours indicated in the one-hop neighbour list, an amount of remaining network node energy and a network node identifier.

According to a third aspect, there is provided a computer program product operable, when executed on a computer, to perform the method steps of the first aspect. Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates a hidden terminal problem;
Figures 2a and 2b show an arrangement with differing communication range and carrier sense range;
Figure 3 illustrates an example wireless communication network according to one embodiment;
Figure 4 illustrates the main processing steps performed when configuring the scheduling of transmissions by sensor nodes;
Figure 5 illustrates collected neighbour lists; and
Figure 6 illustrates adjusting the communication period.

### DESCRIPTION OF THE EMBODIMENTS

### Overview

Before describing embodiments in any detail, first an overview will be provided. Embodiments seek to address a problem of network nodes being undetectable or hidden from each other (referred to as a 'hidden terminal' problem) in a wireless network such as, for example, a wireless network utilising the IEEE 802.15.4 protocol. It will be appreciated that the hidden network node problem occurs when two transmitting nodes using the same channel do not know the existence of the other whilst communicating with a common receiver. An IEEE 802.15.4 network adopts a carrier sense multiple access with collision avoidance (CSMA/CA) technique to manage access control of the network nodes. However, data transmissions under CSMA/CA are not always collision free because a network node may not detect another network node making a transmission.

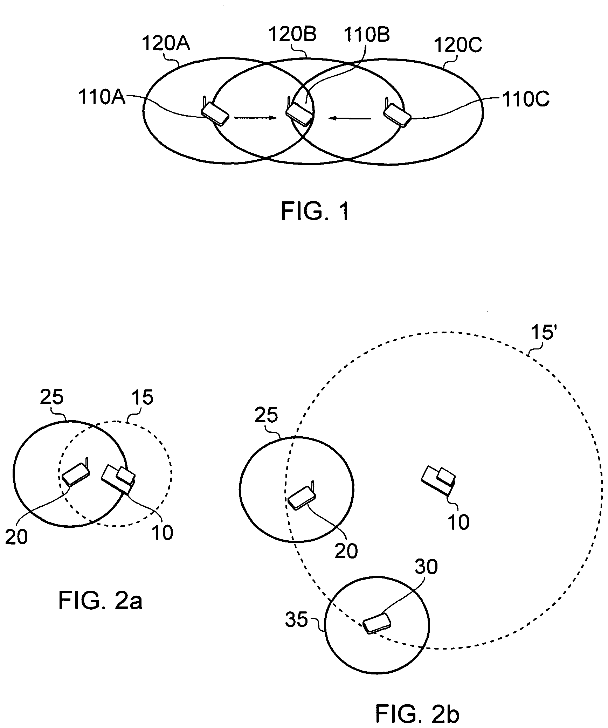

Figure 1 illustrates the hidden terminal problem where terminals 110A and 110C are unable to detect transmissions from each other as neither can detect the transmissions since the transmission range 120A and 120C is insufficient. In particular terminals 110A and 110C want to send packets to terminal 110B, but terminal 110C cannot sense/receive transmissions from terminal 110A. When terminal 110C wishes to send to terminal 110B, terminal 110C senses a free channel even though terminal 110A is sending to terminal 110B. A collision then occurs at terminal 110B because terminal 110A is hidden from terminal 110C.

Figures 2a and 2b illustrate different example communication and carrier sense ranges of a base station 10 and network node 20, such as a sensor node. Figure 2a shows an arrangement where the communication range and carrier sense range are equal. Figure 2b shows an arrangement where the communication range with the base station 10 is three times that of the carrier sense range of the sensor nodes 20, 30. In this arrangement, communication between the base station 10 and the sensor nodes 20, 30 is possible when the sensor nodes 20, 30 are anywhere within the coverage area 15' of the base station 10. This is because the base station 10 can make transmissions which can be received within the coverage area 15'. Also, the sensitivity of the receiver of the base station 10 is such that transmissions occurring from a network node within the coverage area 15' can be received and decoded. However, due to the limited resources of the sensor nodes 20, 30 and the poor sensitivity of their receivers, the sensor nodes 20, 30 are only able to detect transmissions of other sensors when within their carrier sense range 25, 35. That is to say that whilst both the sensors 20, 30 are able to detect transmissions from the base station 10 (because these can be transmitted at significantly higher power) each sensor 20, 30 is unable to detect the transmission of any sensors outside the carrier sense range 25, 35.

As numbers of network nodes within the network increases, the number of collisions due to undetected network nodes concurrently transmitting will increase, resulting in increasingly unsuccessful data transmissions. This leads to failures in medium access control, given that the carrier sensing function of the CSMA/CA needs communicating nodes detecting or overhearing each other in order to avoid transmission collisions. Therefore, networks using CSMA/CA such as those utilising the IEEE 802.15.4 protocol may be affected. Also, this protocol is inherently designed for low traffic rate scenarios and so the standard does not consider this hidden terminal problem. However, advancements in base station antennae design and radio technology are increasing the communication range of wireless nodes and the proliferation of new sensor applications introduces more functional nodes into the wireless system which will lead to network degradation due to the effects of hidden network nodes.

Accordingly, an approach is used where, for example, a wireless sensor network communicates with, for example, a central sink base station. Communication between every sensor network node and the base station occurs as a single-hop transmission. This approach utilises cooperative communication amongst sensor network nodes. The cooperative approach enables any network node and its one-hop neighbours to form a fully connected local cluster so that every network node in the cluster can overhear or detect the existence of and communication by other cluster members. Such an approach ensures that no network node can be hidden or undetected within the cluster. Hidden network nodes outside the cluster are possible and may be incorporated into other clusters or even create a cluster within which the hidden network node is the only network node within that cluster. Once the clusters are formed, scheduling-based coordination among the different cluster groups is performed typically under the control of the base station. This results in temporal, frequency or other encoding separations between transmissions of network nodes which are not detectable by each other. As a result, transmission collisions and resource waste contributed by hidden network nodes are alleviated and the transmission efficiency of the wireless sensor network is improved. Overall communication network enhancement is achieved by optimising the base station's throughput while maintaining a low complexity, fair access and low-overhead communication protocol. This approach is also completely compatible with the IEEE 802.15.4 standard.

### Wireless Communications Network

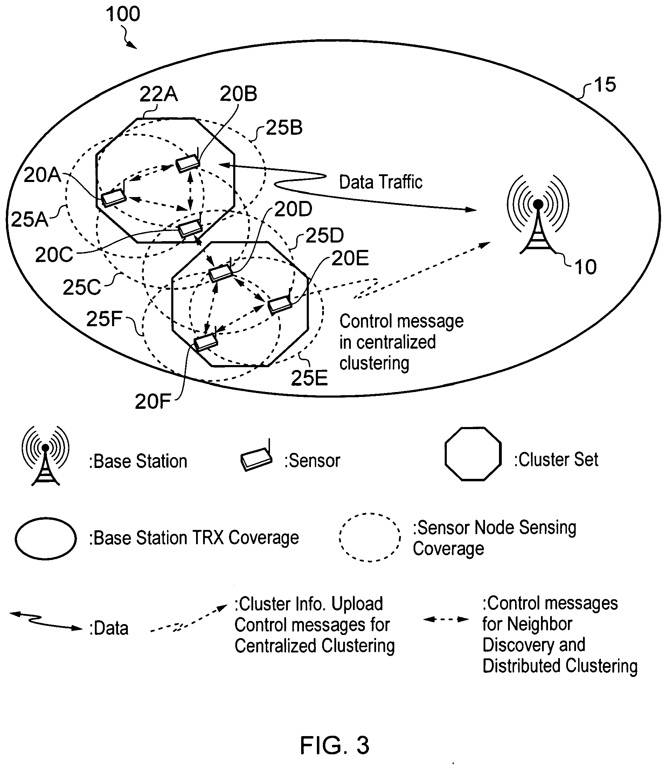

Figure 3 illustrates an example wireless communication network, generally 100, according to one embodiment. As can be seen, a base station 10 has a coverage area 15. Within the coverage area 15 is provided a number of sensor nodes 20a - 20f, each of which has associated therewith a sensor coverage area 25a - 25f. It will be appreciated that this example just shows a small subset of sensor nodes that may be deployed.

As can be seen, the sensor node 20a is unable to detect transmissions by the sensor node 20f since sensor node 20f does not fall within the coverage area 25a of the sensor node 20a. As such, sensor node 20f is hidden or undetectable by sensor node 20a and so sensor node 20a would be unable to detect when sensor node 20f was transmitting.

### Cluster Formation and Scheduling

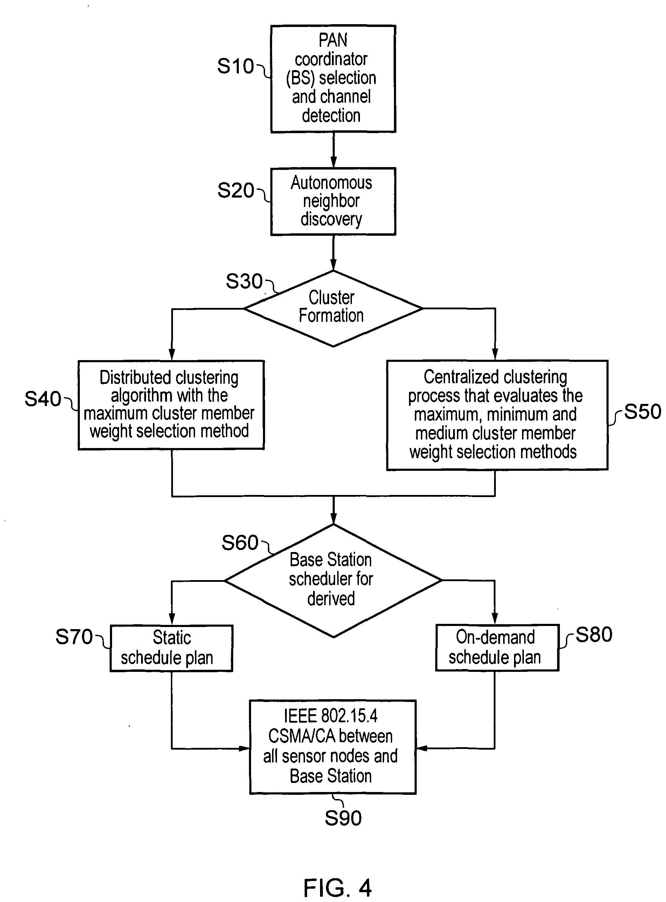

Figure 4 illustrates the main processing steps performed by the base station 10 and sensor nodes 20 when configuring the scheduling of transmissions by sensor nodes 20.

At step S10, the base station 10 configures itself as a personal area network (PAN) coordinator, senses current channels being used and selects a suitable channel for use by its wireless network.

At step S20, the base station 10 initiates the cluster formation process. Every sensor node 20 broadcasts its node identifier using a node announcement (NA) message. The NA message announces a node's existence to one-hop neighbouring nodes. In order to avoid NA message collisions, all sensor nodes 20 are configured to initiate at the same time but use the node's unique identifier as a differentiation reference to separate the NA messages of sensor nodes 20. In other words, each sensor node 20 applies a different time offset based on its unique node identifier in order that each sensor node transmits its NA message at a different time. From node announcement messages that are received by each individual sensor node 20, a one-hop neighbour list can be assembled. For example, the sensor node 20b will detect node announcement messages from sensor nodes 20a and 20c and include sensor nodes 20a and 20c in its neighbour list.

Thereafter, at step S30, an assessment is made of whether to perform a distributed or centralised cluster formation procedure. Whether to perform a distributed or centralised cluster formation procedure is choice that can be made and either is selectable. Both approaches present different system assumptions and different characteristics. Their common objective is to create higher-level frame multiplexing for sensor nodes 20 that ensures efficient bandwidth utilisation. In other words, the cluster formation seeks to minimise the number of clusters such that all sensor nodes 20 in the network 100 belong to a cluster. This problem is related to the minimum dominating set problem in graph theory which is an NP-complete problem. Maximising the average cluster size while maintaining every node associated with a cluster is equal to minimising the number of clusters.

### Distributed Cluster Formation

Assuming that distributed cluster formation is to occur, then processing proceeds to step S40. This cluster formation approach assumes a flat communication architecture where sensor nodes 20 are equally resourceful and important. Sensor nodes 20 cooperatively derive their radio connectivity relationships and autonomously build their cluster set. The cluster formation algorithm is repeatedly executed by a sensor node 20 until the sensor node 20 becomes associated with a cluster.

In particular, following the generation of the neighbour list, every sensor node 20 derives its node degree. It will be appreciated that a node degree is the number of one-hop neighbours, and this will be indicated in the neighbour list for that sensor node. From the example given above, the node degree of sensor node 20b is two (i.e. sensor node 20b has two one-hop neighbours).

Thereafter, all sensor nodes 20 derive a cluster formation (CF) delay parameter that is based on a normalised weight function of the sensor node degree, the sensor node's remaining energy and the sensor node's unique identifier. The greater the value of the node degree and the greater the value of the sensor node's remaining energy, the smaller the CF delay parameter will be. The smaller the CF delay parameter is the greater the node's chance of being a cluster head will be because each sensor node 20 is configured to broadcast a cluster formation (CF) message after the CF delay has expired. Transmission of the CF message announces the sensor node 20 as a local cluster head and its one-hop neighbours that receive this message will terminate their CF announcement messaging and become a cluster member candidate. Hence, it can be seen that the sensor node 20 having the greatest number of one-hop neighbours and the greatest amount of remaining energy is most likely to be the local cluster head. However, it will be appreciated that the CF delay weight function is tunable to meet various objectives. In this example, sensor node 20c sends the CF message first because it has more remaining power than sensor node 20d who had the same node degree i.e. they both have three one-hop neighbours.

Those sensor nodes 20 that received the CF message (sensor nodes 20a, 20b, 20d) will send a cluster formation acknowledgement (CFA) message (which includes its neighbour list) to the cluster head 20c.

The cluster head 20c collects these neighbour lists received within the CFA messages and then derives the largest set of members having no sensor nodes 20 which are unable to detect transmissions from every of the other sensor nodes 20 within the cluster.

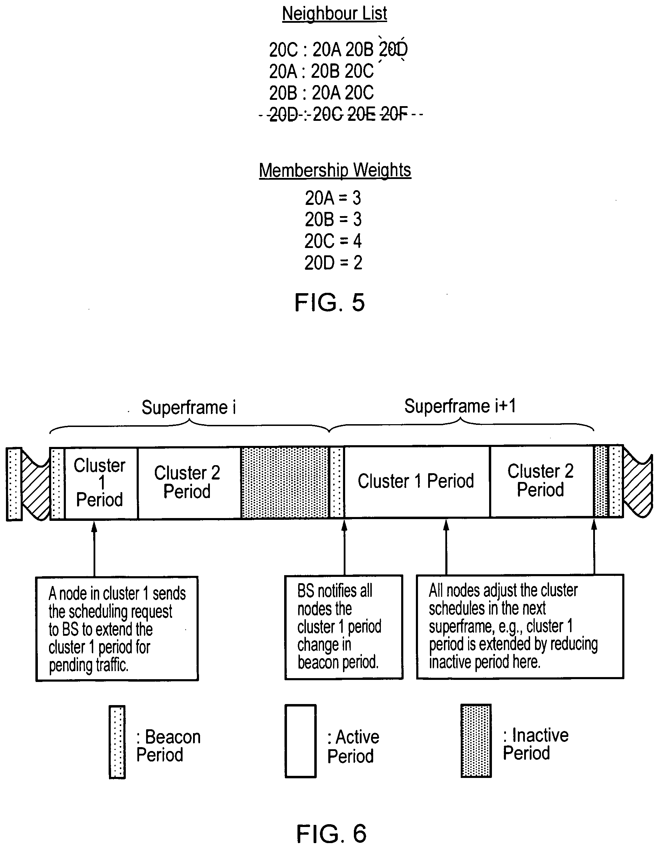

Figure 5 illustrates the collected neighbour lists which were received by sensor node 20c.

The cluster set is decided by first checking if it is apparent from the received neighbour lists that some sensor nodes are not detectable by other sensor nodes. As can be seen, it is clear that sensor nodes 20a and 20b are not detectable by sensor nodes 20d, 20e or 20f and vice-versa. Accordingly, the cluster head 20c determines a member weighting of each of the sensor nodes within the neighbour list. The member weighting is the occurrence of the sensor node within the received neighbour lists. For example, sensor node 20a appears three times in the neighbour lists and so its member weighting is three. The member weighting for sensor node 20b is three, the member weighting for sensor node 20c is four and the member weighting for sensor node 20d is two.

The cluster head 20c then sequentially removes the sensor nodes having the smallest weight until all sensor nodes within the cluster are able to detect the presence of each other (i.e. all the sensor nodes of the cluster appear in the neighbour lists of every sensor node in the cluster). In this example, the cluster head 20c removes the sensor node 20d by removing the neighbour list for sensor node 20d and removing the occurrence of sensor node 20d from the remaining neighbour list as illustrated by the dashed lines in Figure 5. The cluster head 20c then checks the remaining neighbour lists to determine whether any of the remaining sensor nodes within the cluster are unable to detect the presence of other sensor nodes within the cluster. If such as situation still exists then the member weighting is recalculated and the sensor node with the lowest member weighting is again removed until a cluster is formed where all of the sensor nodes are able to detect the transmissions of each other. In this example, it can be seen that through the removal of sensor node 20d a cluster 22a formed of sensor nodes 20a, 20b, 20c results and the neighbour list indicates that each of these sensors nodes is able to detect the transmission of the others.

Once a cluster with no hidden nodes is formed then the cluster head broadcasts a cluster formation complete (CFC) message. The CFC message includes the identifiers of all the nodes that are members of the cluster. In this example, a CFC message will be transmitted by sensor node 20c which includes the node identifiers for sensor nodes 20a and 20b. Sensor nodes 20a and 20b will then associate themselves with that cluster 22a and cease the cluster formation processing. However, sensor node 20d will note that it was not included in the CFC message and will prepare for another cycle of cluster formation processing. This processing continues until all sensor nodes become members of a cluster. It will be appreciated that this may result in single sensor nodes being the only members of their own cluster.

Accordingly, it can be seen that the cluster formation algorithm described uses limited local information and simple heuristics to build a cluster. The complexity of the algorithm is O (N) where N is the average node degree. With such constraints, the cluster formation result is possibly sub-optimal in that the algorithm may result in a higher number of clusters than could otherwise be possible. A reduced number of clusters may be formed by instead utilising a centralised cluster formation approach instead, as will be described in more detail below.

### Centralised Cluster Formation

Assuming that centralised cluster formation is to occur, then processing proceeds to step S50. This approach assumes a hierarchical network where the base station 10 derives clusters. Once the neighbour lists have been derived by each sensor node 20, these are then sent to the base station 10. The base station 10 stores the neighbour lists for all sensor nodes and calculates the node degrees. The base station 10 then performs multiple different cluster formation algorithms and compares the results to arrive at a final cluster arrangement. In this example, three cluster formation heuristics are utilised, the clustering results are compared and the best result is selected according to particular clustering objective. For example, the clustering objective may be to maximise cluster size, minimise cluster numbers, minimise variation in number of sensor nodes within clusters or some combination of these or other objectives.

Accordingly, the first clustering algorithm starts with the node with the highest node degree and attempts to form clusters in the manner described above for the distributed scheme. This approach attempts to build the clusters from the larger set to the small set, but potentially forms clusters with high variations in size if the variation of the node degree is also high.

The second algorithm starts with the node with the lowest node degree. The base station 10 uses the low degree node as a cluster head and its one-hop neighbours as cluster member candidates to set up a cluster. It checks if sensor nodes within the cluster are unable to detect the transmissions from each other and if so removes the sensor node with the highest member weight and again checks to see whether the resultant cluster contains sensor nodes which are unable to detect transmissions of every sensor node within the cluster. This process is repeated until every sensor node within the cluster is able to detect the transmissions of every other sensor node within the cluster. This approach builds the cluster from a small set to a large set, consequently reducing the variations between cluster sizes if the variation of node density is high.

The third algorithm starts with a node with a medium node degree, such as the average or the median node degree. The third algorithm is similar to that of the first and second algorithms and follows a mean approach in cluster set up.

Given all three algorithms mentioned above, after each run of the cluster formation algorithms, the base station 10 will remove the sensor nodes that have been selected to be within a cluster from its records. It then updates the node degree and neighbour list of the remaining nodes. The base station 10 then repeats the algorithms to set up a second cluster. This process is repeated until every node is allocated to a cluster. The base station 10 compares the clustering results of the cluster formation algorithms and selects the best result according to the clustering objective. Finally, it broadcasts the cluster sets to every sensor node.

As can be seen in the centralised cluster formation process, the base station 10 runs the three heuristic cluster formation algorithms with global node information to find the desired cluster set up. The complexity of the algorithm is O (3N), where N is the number of sensor nodes covered by the base station 10. It is clear that such a clustering approach is more sophisticated than the distributed clustering algorithm with the cost of additional communication, computation overhead and protocol robustness. To minimise such overhead cost, it is possible to reduce the execution of cluster formation algorithms using the collected node information, for example the variation of node degree and the network topology, etc.

### Transmission Scheduling

Once cluster formation has been completed processing proceeds to step S60 where the base station 10 assigns communication schedules to all clusters. The scheduling method may depend on the particular application. Accordingly, the application type is determined at step S60.

### Static Schedule Plan

When it is determined that the sensor nodes 20 will deliver periodic traffic to the base station 10 the static scheduling plan is used at step S70. In this approach, the base station 10 assigns fixed transmission schedules to clusters. In one approach, a time-division multiplex scheduling scheme is provided and the length of a transmission schedule is proportional to the cluster size. This means that each cluster is allocated part of the transmission schedule in proportion to the number of sensor nodes within the cluster. This gives each sensor node an equal opportunity in the transmission schedule.

### On Demand Schedule Plan

When it is determined that the sensor nodes will provide non-periodic traffic to the base station 10, an on demand scheduling plan is adopted at step S80 since it provides better bandwidth utilisation than the static scheduling plan.

The scheduling process can be integrated with the normal operation of the standard. With the IEEE 802.15.4 standard, the scheduling request from a sensor node 20 is sent in the communication period of the cluster that the node belongs to. After the base station 10 receives the request, it adjusts the communication period of that cluster in the next super frame and notifies the change to all nodes in the network in the next beacon phase, as illustrated in Figure 6. This has no impact on the standard configuration and message flows since it adopts the existing beacon message and contention access structures to enable the schedule adjustment. A downside of this approach is that there is additional control overhead which depends on the frequency of traffic change of a node.

This approach results in clusters that are disjoint and each node is assigned to only one communication period in the super frame. An alternative approach is to create intersecting clusters where sensor nodes can belong to more than one cluster and hence can transmit and/or receive in more than one communication period. Sensor nodes associated with more than one cluster must meet the non-hidden terminal condition in all the relevant clusters but have fewer restrictions as to when then can transmit, which improves the overall system throughput. Clustering techniques similar to those already proposed above can be used to achieve this, the only difference is after the definition of each cluster, the nodes in that cluster are not removed from the neighbour lists of nodes yet to be assigned to a cluster and can therefore be incorporated into other clusters.

It can be seen that through this approach cooperative communication between sensor nodes is used in cluster formation and scheduling to improve the transmission performance compared to that provided for by IEEE 802.15.4. This improvement is due to the following features. In the clustering stage, the clusters are set up in a way to optimise the bandwidth efficiency whilst minimising the hidden sensor node problem. A collision avoidance neighbour discovering process may be utilised. The autonomous and distributed cluster formation algorithm enables high flexibility for newly joining sensors. The performance of various cluster algorithms are analysed and a centralised method at the base station may be used to select the best cluster set. In the scheduling coordination, the scheduling method depends on the sensor node traffic pattern and provides effective bandwidth utilization and is highly compatible with the IEEE 802.15.4 standard. After a schedule is derived, sensor nodes of every cluster follow this schedule plan and send data traffic to the base station using IEEE 802.15.4 CSMA/CA. The overall design introduces small control message overhead, low protocol complexity and provides fair access control for every sensor node.

The Figure 3 arrangement may be, for example, a stationary wireless sensor network (WSN) running a single-hop star topology. All sensor nodes directly report their sensed data to the base station 10. Wireless sensor network applications such as grid monitoring, event detection and the like usually use such a network configuration. With an improved antenna system at the base station (improved receiver sensitivity) more IEEE 802.15.4 sensor nodes may be included in the wireless sensor network. In this case, the communication range between a sensor node 20 and the base station 10 is increased, but the carrier sense range of a sensor node remains the same. That considerably increases the problem that the transmissions from one sensor node may be hidden from another since a senor node 20 has more network coverage where it cannot perform carrier sensing. When the range of the base station 10 is increased as indicated in Figure 2b, it is estimated that the probability of hidden nodes increases from 40 to 90%, given uniform sensor node distribution and uniform traffic generation in the network. The approach mentioned above alleviates the performance impact due to such hidden sensor nodes whilst maintaining low communication complexity and overhead. Also, this approach is completely compatible and integrates into CSMA/C, such as that specified by IEEE 802.15.4.

The approach mentioned above eases the hidden sensor node problem when sensor nodes and their base station are set to communicate directly. As mentioned above, the number of potential hidden sensor nodes increases if the communication range of a sensor is extended. This range improvement creates many benefits such as, for example, ease of routing complexity, energy saving, etc but it complicates channel access by sensor nodes. Embodiments maintain such benefits in an extended range within a sensor network while reducing degradation caused by hidden sensor nodes. This provides many advantages. First, embodiments utilise neighbour cooperation to create non-hidden terminal local clusters where the sensor nodes can reliably communicate with the base station due to the adoption of the CSMA/CA and scheduling coordination at the base station. Through this approach, the local cluster head is only responsible for cluster set-up and is not involved in forwarding packets between sensor nodes and a base station. Thus this approach differs from previous cluster protocols like a low-energy adaptive clustering hierarchy. In addition, the cluster head duties are lightweight so that that cluster head rotation is not necessary. Secondly, embodiments utilise distributed and centralised clustering methods. The distributed technique enables high flexibility in clustering while centralised techniques minimises the number of cluster sets in a network, improving bandwidth utilisation. The distributed cluster formation algorithm allows sensor nodes to freely join or leave the network because its procedure is autonomous and localised. On the other hand, the centralised cluster formation adapts to the hierarchical structure of the wireless sensor network which is a star topology that increases the overall transmission efficiency. Such design practicality considers different network characteristics from different sensor applications. Third, embodiments utilise scheduling coordination for derived clusters that reduces inter-cluster co-channel interference due to the elimination of hidden sensor nodes, while the CSMA/CA technique is used to manager intra-cluster and co-channel interference. Integrating the CSMA/CA approach with limited scheduling provides an improved network. The scheduling solution is tuneable to different traffic patterns and conveniently integrates into the IEEE 802.15.4 standard. In addition, the on-demand scheduling approach improves the bandwidth utilisation by adaptively and swiftly adjusting scheduling to enable data communication between a sensor node and the base station.

In addition to the mitigation of the hidden sensor node problem, the cluster configuration in a WSN provides benefits at the routing and application levels. Clustering techniques benefit the efficiency of data aggregation and packet routing. In addition, using the association data between sensor nodes and their clusters creates a virtual WSN map without actual geographical coordination data and this map is valuable for location-aware sensor applications like interactive data query and highway monitoring.

Accordingly, a comprehensive communication mechanism is provided for an extended range. The design conforms to existing standards and maintains low complexity and low overhead. This approach also introduces fewer control messages and overhead costs compared to the IEEE 802.11 standard because a request-to-send/clear-to-send mechanism is not required. Furthermore, this approach does not required a two-radio implementation as specified in sparse topology and energy management and power-aware multi-access with signalling protocols and is more scalable and more compatible with the current standards than those scheduling schemes.

This approach can be exploited in a machine-to-machine access point module which could be added to a home service gateway or a femto base station.

A person of skill in the art would readily recognise that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of scheduling network node transmission in a wireless communication network (100), said method comprising:
causing allocation (S10 - S50) of each network node (20) of said wireless communication network to at least one of a plurality of clusters (22) of network nodes, each cluster of network nodes comprising only those network nodes which detect transmissions from every network node within that cluster by determining one-hop neighbours for each network node from a neighbour list for that network node and including in a cluster of network nodes only those network nodes whose neighbour list includes all other network nodes within the cluster of network nodes; and
scheduling transmissions (S60 - S90) by network nodes within each of said plurality of clusters to be performed using resources of a transmission separation scheme allocated to be shared by network nodes within that cluster of network nodes.

2. The method of claim 1, wherein said step of causing allocation comprises allocating each network node to at least one of a plurality of clusters of network nodes using multple algorithms to form cluster arrangements and comparing the cluster arrangements to arrive at a final cluster arrangement which minimises a total number of said plurality of clusters of network nodes.

3. The method of any preceding claim, wherein said step of causing allocation comprises causing network nodes to perform a node announcement and to derive a one-hop neighbour list for each network node, and utilising each one-hop neighbour list in multiple result cluster of network nodes formation procedure which determines a number of different resultant pluralities of clusters of network nodes by allocating network nodes to clusters of network nodes starting with at least one of network nodes having a highest number of neighbours, network nodes having a lowest number of neighbours and network nodes having intermediate number of neighbours.

4. The method of claim 3, wherein said step of causing allocation comprises selecting a resultant plurality of clusters of network nodes which minimises a number of clusters of network nodes.

5. The method of claim 3 or 4, wherein said step of causing allocation comprises selecting a resultant plurality of clusters of network nodes which minimises a variation in a number of network nodes within each clusters of network nodes.

6. The method of any preceding claim, wherein said step of causing allocation comprises causing network nodes to perform a node announcement and derive a one-hop neighbour list for each network node, delaying a cluster head transmission by each network node based on at least one of a number of neighbours indicated in said one-hop neighbour list for that network node and remaining energy of that network node, receiving one-hop neighbour lists from each network node which received said cluster head transmission from a cluster head network node for that cluster of network nodes and deriving a cluster of network nodes using an algorithm to form cluster arrangements and comparing the cluster arrangements to arrive at a final cluster arrangement which maximises a number of network nodes within that cluster of network nodes and which are also indicated by said one-hop neighbour lists as being one-hop neighbours of every network node within that cluster of network nodes.

7. The method of claim 3 or 6, comprising the step of delaying said node announcement by a period based on an identifier of said network node.

8. The method of claim 6 or 7, wherein said step of delaying said cluster head transmission comprises delaying said cluster head transmission by each network node based on an identifier of said network node.

9. The method of claim 8, wherein said step of scheduling comprises allocating said resources to each cluster of network nodes in proportion to at least one of a number of network nodes within that cluster of network nodes and a number of pending traffic transmission requests from network nodes within that cluster of network nodes.

10. The method of any preceding claim, wherein said step of scheduling comprises scheduling network nodes within each of said plurality of clusters to perform carrier sense multiple access with collision avoidance transmissions in a time period allocated for shared transmissions by network nodes within that cluster of network nodes.

11. A network node gateway operable to schedule network node transmission in a wireless communication network, said network node gateway comprising:
allocation logic operable to cause allocation of each network node (20) of said wireless communication network (100) to at least one of a plurality of clusters (22) of network nodes, each cluster of network nodes comprising only those network nodes which detect transmissions from every network node within that cluster by determining one-hop neighbours for each network node from a neighbour list for that network node and including in a cluster of network nodes only those network nodes whose neighbour list includes all other network nodes within the cluster of network nodes; and
scheduling logic operable to schedule transmissions by network nodes within each of said plurality of clusters to be performed using resources of a transmission separation scheme allocated to be shared by network nodes within that cluster of network nodes.

12. A computer program product operable, when executed on a computer, to perform the method steps of any one of claims 1 to 10.

## Patentansprüche

1. Verfahren zur Zeitplanung von Netzknoten-Übertragungen in einem drahtlosen Kommunikationsnetz (100), wobei besagtes Verfahren umfasst:
das Veranlassen der Zuweisung (S10 - S50) eines jeden Netzknotens (20) besagten drahtlosen Netzes zu mindestens einem aus einer Vielzahl von Clustern (22) von Netzknoten, wobei jeder Cluster von Netzknoten nur diejenigen Netzknoten umfasst, welche Übertragungen von jedem Netzknoten innerhalb des betreffenden Clusters feststellen, indem sie aus einer Nachbarliste für den betreffenden Netzknoten One-Hop-Nachbarknoten für jeden Netzknoten bestimmen und in einen Cluster von Netzknoten nur diejenigen Netzknoten aufnehmen, deren Nachbarliste alle anderen Netzknoten innerhalb des Clusters von Netzknoten umfassen; und
die Zeitplanung von Übertragungen (S60 - S90) durch Netzknoten in jedem aus der besagten Vielzahl von Clustern, die unter Verwendung von Betriebsmitteln eines Übertragungstrennungsschemas durchzuführen sind, das so zugewiesen ist, dass es von Netzknoten innerhalb besagten Clusters von Netzknoten zu teilen ist.

2. Das Verfahren nach Anspruch 1, wobei besagter Schritt des Veranlassens der Zuweisung das Zuweisen eines jeden Netzknotens zu mindestens einem aus der Vielzahl von Clustern von Netzknoten umfasst, multiple Algorithmen zur Bildung von Clusterarrangements verwendend und die Clusterarrangements vergleichend, um zu einem abschließenden Clusterarrangement zu gelangen, welches eine Gesamtzahl der besagten Vielzahl von Clustern von Netzknoten minimiert.

3. Das Verfahren nach einem jeglichen der vorgenannten Ansprüche, wobei der besagte Schritt des Veranlassens der Zuweisung umfasst, die Netzknoten dazu zu veranlassen, ein Node Announcement durchzuführen und für jeden Netzknoten eine One-Hop-Nachbarliste abzuleiten, und weiterhin jede der One-Hop-Listen im Verfahren zur Bildung multipler Varianten von Netzknoten-Clustern zu benutzen, wobei besagtes Verfahren eine Anzahl verschieden ausfallender Vielzahlen von Netzknoten-Clustern aus Netzknoten hervorbringt, damit beginnend, dass mindestens einer der Netzknoten eine höchste Anzahl von Nachbarn hat, dass weiterhin Netzknoten eine niedrigste Anzahl von Nachbarn haben und dass weiterhin Netzknoten eine dazwischenliegende Anzahl von Nachbarn haben.

4. Das Verfahren nach Anspruch 3, wobei besagter Schritt des Veranlassens der Zuweisung umfasst, eine resultierende Vielzahl von Clustern von Netzknoten auszuwählen, welche eine Anzahl von Clustern von Netzknoten minimiert.

5. Das Verfahren nach Anspruch 3 oder 4, wobei besagtes Veranlassen der Zuweisung umfasst, eine resultierende Vielzahl von Clustern von Netzknoten auszuwählen, welche eine Variation einer Anzahl von Netzknoten in jedem Cluster von Netzknoten minimiert.

6. Das Verfahren nach einem jeglichen der vorgenannten Ansprüche, wobei besagter Schritt des Veranlassens der Zuweisung umfasst, Netzknoten dazu zu veranlassen, ein Node Announcement durchzuführen und eine One-Hop-Nachbarliste für jeden Netzknoten abzuleiten, auf der Grundlage von mindestens einem von mehreren Nachbarn, die in der besagten One-Hop-Nachbarliste für diesen Netzknoten angegeben sind, und auf der Grundlage der verbleibenden Energie dieses Netzknotens eine Clusterkopfübertragung zu verzögern, eine One-Shop-Nachbarliste von jedem Netzknoten zu empfangen, der besagte Clusterkopfübertragung von einem Clusterkopf-Netzknoten für diesen Cluster von Netzknoten empfangen hat, und weiterhin unter Verwendung eines Algorithmus zur Bildung von Cluster-Arrangements einen Cluster von Netzknoten abzuleiten, und weiterhin die Cluster-Arrangements zu vergleichen, um zu einem abschließenden ClusterArrangement zu gelangen, welches eine Anzahl von Netzknoten innerhalb dieses Clusters von Netzknoten maximiert, wobei diese ebenfalls von besagten One-Shop-Nachbarlisten indiziert werden und One-Shop-Nachbarn eines jeden Netzknotens innerhalb dieses Clusters von Netzknoten sind.

7. Das Verfahren nach Anspruch 3 oder 6, den Schritt des Verzögerns besagten Node Announcements um einen Zeitraum auf der Grundlage einer Kennung besagten Netzes umfassend.

8. Das Verfahren nach Anspruch 6 oder 7, wobei besagter Schritt des Verzögerns der besagten Clusterkopfübertragung das Verzögern der besagten Clusterkopfübertragung durch jeden Netzknoten auf der Grundlage einer Kennung besagten Netzes erfolgt.

9. Das Verfahren nach Anspruch 8, wobei besagter Schritt des Zeitplanens umfasst, besagte Betriebsmittel jedem Netzknotencluster im Verhältnis zu mindestens einem aus einer Anzahl von Netzknoten in einem Cluster von Netzknoten und zu mindestens einer aus einer Anzahl anhängiger Verkehrsübermittlungsanforderungen von Netzknoten in besagtem Netzknotencluster zuzuweisen.

10. Das Verfahren nach einem jeglichen der vorgenannten Ansprüche, wobei besagter Zeitplanungsschritt das Planen von Netzknoten in jedem aus der besagten Vielzahl von Clustern umfasst, um in einem Zeitraum, der für geteilte Übertragungen durch Netzknoten in besagtem Netzknotencluster zugewiesen wurde, Übertragungen per Mehrfachzugriff mit Trägerprüfung (Carrier Sense Multiple Access, CSMA) mit Kollisionsvermeidung auszuführen.

11. Netzknotengateway, betriebsbereit für die Zeitplanung von Netzknotenübertragungen in einem drahtlosen Kommunikationsnetz, wobei besagtes Netzknotengateway umfasst:
eine Zuweisungslogik, die betriebsbereit ist für das Veranlassen der Zuweisung eines jeden Netzknotens (20) besagten drahtlosen Netzes (100) zu mindestens einem aus einer Vielzahl von Clustern (22) von Netzknoten, wobei jeder Cluster von Netzknoten nur diejenigen Netzknoten umfasst, welche Übertragungen von jedem Netzknoten innerhalb des betreffenden Clusters feststellen, indem sie aus einer Nachbarliste für den betreffenden Netzknoten One-Hop-Nachbarknoten für jeden Netzknoten bestimmen und in einen Cluster von Netzknoten nur diejenigen Netzknoten aufnehmen, deren Nachbarliste alle anderen Netzknoten innerhalb des Clusters von Netzknoten umfassen; und
eine Zeitplanungslogik, die betriebsbereit ist für die Zeitplanung von Übertragungen durch Netzknoten in jedem aus der besagten Vielzahl von Clustern, die unter Verwendung von Betriebsmitteln eines Übertragungstrennungsschemas durchzuführen sind, das so zugewiesen ist, dass es von Netzknoten innerhalb besagten Clusters von Netzknoten zu teilen ist.

12. Computerprogramm-Produkt, dafür ausgelegt, um bei dessen Ausführung auf einem Computer die Verfahrensschritte gemäß einem beliebigen der Ansprüche 1 bis 10 durchzuführen.

## Revendications

1. Procédé d'ordonnancement de transmission de noeud de réseau dans un réseau de communication sans fil (100), ledit procédé comprenant les étapes suivantes :
provoquer l'allocation (S10 - S50) de chaque noeud de réseau (20) dudit réseau de communication sans fil à au moins une d'une pluralité de grappes (22) de noeuds de réseau, chaque grappe de noeuds de réseau comprenant uniquement les noeuds de réseau qui détectent des transmissions depuis chaque noeud de réseau au sein de cette grappe en déterminant des voisins à un seul bond pour chaque noeud de réseau à partir d'une liste de voisins pour ce noeud de réseau et incluant dans une grappe de noeuds de réseau uniquement les noeuds de réseau dont la liste de voisins inclut tous les autres noeuds de réseau au sein de la grappe de noeuds de réseau ; et
ordonnancer des transmissions (S60 - S90) par des noeuds de réseau au sein de chacune de ladite pluralité de grappes devant être effectuées en utilisant des ressources d'un schéma de séparation de transmission allouées pour être partagées par des noeuds de réseau au sein de cette grappe de noeuds de réseau.

2. Procédé selon la revendication 1, dans lequel ladite étape consistant à provoquer l'allocation comprend l'allocation de chaque noeud de réseau à au moins une d'une pluralité de grappes de noeuds de réseau en utilisant de multiples algorithmes pour former des agencements de grappes et la comparaison des agencements de grappes pour arriver à un agencement de grappes final qui minimise un nombre total de ladite pluralité de grappes de noeuds de réseau.

3. Procédé selon l'une quelconque des revendications précédentes, dans lequel ladite étape consistant à provoquer l'allocation comprend le fait d'amener des noeuds de réseau à effectuer une annonce de noeud et à dériver une liste de voisins à un seul bond pour chaque noeud de réseau, et l'utilisation de chaque liste de voisins à un seul bond dans une procédure de formation de grappe de noeuds de réseau à résultats multiples qui détermine un nombre de pluralités résultantes différentes de grappes de noeuds de réseau en allouant des noeuds de réseau à des grappes de noeuds de réseau en commençant par au moins un parmi des noeuds de réseau ayant un nombre de voisins le plus haut, des noeuds de réseau ayant un nombre de voisins le plus bas et des noeuds de réseau ayant un nombre de voisins intermédiaire.

4. Procédé selon la revendication 3, dans lequel ladite étape consistant à provoquer l'allocation comprend la sélection d'une pluralité résultante de grappes de noeuds de réseau qui minimise un nombre de grappes de noeuds de réseau.

5. Procédé selon la revendication 3 ou 4, dans lequel ladite étape consistant à provoquer l'allocation comprend la sélection d'une pluralité résultante de grappes de noeuds de réseau qui minimise une variation d'un nombre de noeuds de réseau au sein de chaque grappe de noeuds de réseau.

6. Procédé selon l'une quelconque des revendications précédentes, dans lequel ladite étape consistant à provoquer l'allocation comprend le fait d'amener des noeuds de réseau à effectuer une annonce de noeud et dériver une liste de voisins à un seul bond pour chaque noeud de réseau, le retardement d'une transmission de tête de grappe par chaque noeud de réseau sur la base d'au moins un d'un nombre de voisins indiqués dans ladite liste de voisins à un seul bond pour ce noeud de réseau et de l'énergie restante de ce noeud de réseau, la réception de listes de voisins à un seul bond en provenance de chaque noeud de réseau qui a reçu ladite transmission de tête de grappe en provenance d'un noeud de réseau de tête de grappe pour cette grappe de noeuds de réseau et la dérivation d'une grappe de noeuds de réseau en utilisant un algorithme pour former des agencements de grappes et la comparaison des agencements de grappes pour arriver à un agencement de grappes final qui maximise un nombre de noeuds de réseau au sein de cette grappe de noeuds de réseau et qui sont également indiqués par lesdites listes de voisins à un seul bond comme étant des voisins à un seul bond de chaque noeud de réseau au sein de cette grappe de noeuds de réseau.

7. Procédé selon la revendication 3 ou 6, comprenant l'étape de retardement de ladite annonce de noeud d'une période sur la base d'un identificateur dudit noeud de réseau.

8. Procédé selon la revendication 6 ou 7, dans lequel ladite étape de retardement de ladite transmission de tête de grappe comprend le retardement de ladite transmission de tête de grappe par chaque noeud de réseau sur la base d'un identificateur dudit noeud de réseau.

9. Procédé selon la revendication 8, dans lequel ladite étape d'ordonnancement comprend l'allocation desdites ressources à chaque grappe de noeuds de réseau proportionnellement à au moins un d'un nombre de noeuds de réseau au sein de cette grappe de noeuds de réseau et d'un nombre de demandes de transmission de trafic en instance en provenance de noeuds de réseau au sein de cette grappe de noeuds de réseau.

10. Procédé selon l'une quelconque des revendications précédentes, dans lequel ladite étape d'ordonnancement comprend l'ordonnancement de noeuds de réseau au sein de chacune de ladite pluralité de grappes pour effectuer des transmissions à accès multiple par détection de porteuse et évitement de collision dans une période de temps allouée pour des transmissions partagées par des noeuds de réseau au sein de cette grappe de noeuds de réseau.

11. Passerelle de noeud de réseau exploitable pour ordonnancer une transmission de noeud de réseau dans un réseau de communication sans fil, ladite passerelle de noeud de réseau comprenant :
une logique d'allocation exploitable pour provoquer l'allocation de chaque noeud de réseau (20) dudit réseau de communication sans fil (100) à au moins une d'une pluralité de grappes (22) de noeuds de réseau, chaque grappe de noeuds de réseau comprenant uniquement les noeuds de réseau qui détectent des transmissions depuis chaque noeud de réseau au sein de cette grappe en déterminant des voisins à un seul bond pour chaque noeud de réseau à partir d'une liste de voisins pour ce noeud de réseau et incluant dans une grappe de noeuds de réseau uniquement les noeuds de réseau dont la liste de voisins inclut tous les autres noeuds de réseau au sein de la grappe de noeuds de réseau ; et
une logique d'ordonnancement exploitable pour ordonnancer des transmissions par des noeuds de réseau au sein de chacune de ladite pluralité de grappes devant être effectuées en utilisant des ressources d'un schéma de séparation de transmission allouées pour être partagées par des noeuds de réseau au sein de cette grappe de noeuds de réseau.

12. Produit de programme informatique exploitable, lorsqu'il est exécuté sur un ordinateur, pour effectuer les étapes de procédé selon l'une quelconque des revendications 1 à 10.
